# NEW EUROPEAN PATENT SPECIFICATION

(11) **EP 2 329 141 B2**
(45) Date of publication and mention of the opposition decision: **02.03.2016**
(45) Mention of the grant of the patent: 05.12.2012
(21) Application number: 09776271.0
(22) Date of filing: 26.08.2009
(51) Int. Cl.: F03D 7/02, F03D 7/04

(54) **PITCH CONTROL SYSTEM**
SYSTEM ZUR ANSTELLWINKELSTEUERUNG
SYSTÈME DE CONTRÔLE DE PAS

(30) Priority: 29.08.2008 DK 200801192; 29.08.2008 US 190692; 23.01.2009 CN 200910138723
(43) Date of publication of application: 08.06.2011
(73) Proprietor: Vestas Wind Systems A/S, 8200 Aarhus N (DK)
(72) Inventor: MIRANDA, Erik Carl Lehnskov, DK-8940 Randers SV (DK); JEPPESEN, Ole Mølgaard, DK-6900 Skjern (DK); LAURITSEN, Steen Morten, DK-8250 Egå (DK)
(74) Representative: Vestas Patents Department
(86) International application number: PCT/DK2009/050216
(87) International publication number: WO 2010/022735

(56) References cited:
- EP-A1- 1 666 723
- EP-A2- 1 659 287
- WO-A1-2006/069573
- WO-A1-2008/031433
- DD-A1- 155 535
- DE-A1- 3 000 678
- DE-A1-102005 034 899
- DE-A1-102006 001 613
- DE-A1-102006 023 411
- DE-A1-102007 006 966
- JP-A- 2003 113 769

## Description

### FIELD OF THE INVENTION

The present invention relates to a pitch control system for operating the blade pitch of the rotor blades of a wind turbine generator. In particular, the present invention relates to testing operational signals of a blade pitch system in order to detect pitch system faults.

### BACKGROUND OF THE INVENTION

One of the fundamental operating components of wind turbine generators is the pitch system for adjusting the pitch of the rotor blades during operation. An important element in the pitch system is the pitch bearing.

Pitch system are subject to faults during use, such faults can relate to bearing faults or faults in other pitch system components.

Bearing damage can e.g. result from corrosion, friction in the pitch system mechanics, lack of grease, fatigue of damaged pitch bearings, etc. Damaged bearings increase the risk of blade pitch blocking which can be crucial for the loads on the turbine. Moreover, the delivery time of bearings is typically very long, damaged bearings can therefore result in long unwanted downtimes.

It may therefore be important to test a pitch system of a wind turbine generator.

DE 10 2005 034 899 discloses a wind energy installation including a generator for production of electrical energy, a rotor which drives the generator and has variable pitch rotor blades and a central control device, and individual pitch devices provided individually for the rotor blades. The individual pitch devices may include an adjustment drive, a communication link to the central control device and a regulator, the rotor blades being adjustable in order to slow down the wind energy installation to a shut-down position. The individual pitch devices may also include a disturbance situation detector which is designed to identify abnormal operating states and to move the rotor blades to a shut-down position. Also provided herein is the method of operating such a wind energy installation.

### SUMMARY OF THE INVENTION

The present invention seeks to provide an improved way of evaluating the conditions of a pitch system of a wind turbine generator.

It may be seen as an object of the present invention to address the above-mention aspects in order to improve the fault detection of pitch systems. Preferably, the invention alleviates, mitigates or eliminates one or more problems related to fault detection of pitch systems. According to a first aspect of the invention there is provided a method of operating a pitch control system for a wind turbine generator comprising two or more rotor blades, the two or more rotor blades comprise a blade pitch system for operating the blade pitch, the method comprises:
- applying a command signal to the blade pitch system, the command signal representing a desired pitch system action, and receiving a response signal from the blade pitch system, the response signal representing an actual pitch system action obtained in response to the command signal and desired pitch system action; and
- comparing the response signal, or derivative thereof, from the blade pitch system to a reference, wherein each of the two or more rotor blades are pitched by independent blade pitch systems, and wherein individual command signals are applied to each of the independent blade pitch systems and individual response signals are received from each of the independent blade pitch systems, and wherein the reference is derived from at least one of the individual response signals.

The invention relates generally to a wind turbine generator comprising two or more rotor blades, however typically the turbines comprise three rotor blades.

The pitch control system may be a part of the wind turbine generator's general electronic control system, such as a dedicated module of the general electronic control system or other means of providing control of the pitching. In embodiments such module may provide the functionality of pitch system testing or pitch system conditional monitoring to the pitch control system.

The pitching of the rotor blades is controlled by applying a command signal, also referred to as a pitch demand, to the blade pitch system in order to operate the pitch system according to a desired action. The command signal is typically in the form of demanded pitch angle and pitching speed. Subsequent to, or concurrently with, applying the command signal, the pitch control system also receives a response signal indicating the pitch response obtained in response to the command signal and desired pitch system action from the blade pitch system. The pitch response may be a detection of the actual pitch action, e.g. a detection of the actual pitch angle and pitch speed by means of sensors. The reference may be in any form suitable for comparison to the response signal or derivative of the response signal. The reference may be in the form of a reference value, in the form of a threshold, in the form of a range, in the form of a reference signal, etc.

In an advantageous embodiment, a signal indicative of a pitch system fault is generated if a difference between the response signal and the reference is detected as being larger than a preset criterion. A pitch system fault may cause the behaviour of the pitch system to deviate from the expected or normal behaviour. This may e.g. be reflected as a retarded response, an uneven response, or any other unexpected response of the pitch system to the applied command signals. A pitch system fault may indicate a pitch bearing fault, however other faults of the pitch system may also be reflected in the pitch system fault, such as seal leakage, or other mechanical faults. A pitch system fault may be reflected directly in the response signal, and the detection may be done by use of the response signal as directly received from the blade pitch system. However, the comparison of the response signal to the reference may advantageously be based on, or be done in terms of, a derived functional expression of the response signal. In an embodiment, the derived functional expression may be based on a difference signal between the response signal and the command signal. By using a difference signal a more clear indication of a pitch system fault may be achieved. The difference signal may be a signal indicating a difference in time, i.e. a signal indicating the time the actual pitch is lacking after the demanded pitch. The difference signal may also be a signal indicating an acceleration, i.e. a signal indicating how fast the actual pitch is adapting to the demanded pitch. The difference signal may also be a signal indicating a difference in degrees, i.e. a signal indicating how many degrees the actual pitch is lacking after the demanded pitch. Other types of difference signals may also be used.

The comparison of the response signal to the reference may in general be based on, or be done in terms of, derived functional expressions or derived statistical values of the response signal. Basing the comparison on derived functional expressions or statistical analysis may improve the certainty of the derived conclusions. A number of derived functional expressions and derived statistical values may be used. As a specific example, the response signal may be compared in terms of a comparison of standard deviations of a difference signal.

The difference between the response signal and the reference may be evaluated against a preset criterion. The use of a preset criterion is a convenient way of evaluating signal behaviour. A number of different types of criteria can be used.

By comparing the response signal from the blade pitch system to a reference, detection of pitch system faults, such as pitch bearing blocking, may be detected at an early stage and thereby avoided or at least diminished before a pitch bearing breaks down occurs, and proper action taken timely. For example, if the pitch bearing behaviour of the bearings is not too different from the preset criteria or if the behaviour can be accounted for in the general operational routines, the wind turbine generator may be down-rated rather than stopped. Moreover, appropriate replacement parts can be ordered in time, and maintenance carefully scheduled. Emergency maintenance may thereby be avoided or at least diminished.

In the first embodiment, each of the two or more rotor blades are pitched by independent blade pitch systems. In this situation individual command signals are applied to the each of the independent blade pitch systems and individual response signals are received from each of the independent blade pitch systems. A pitch system may be exposed to various factors which may incur a drift or change over time in the response parameters of the pitch system during the operation. Such factors may relate to temperature gradients, transient loads, such as gusting, and other factors. The individual pitch systems may be exposed to different factors, and the response parameters of the individual pitch systems may behave differently over time for different blade pitch systems. In the first embodiment, pitch system faults reflected in the response signals may be detected already when a single pitch system starts to behave in a different manner.

In the first embodiment, the reference may be derived from at least one individual response signal. It is thereby rendered possible to test the individual response signals of each of the two or more rotor blades against the collective behaviour of all or some of the involved pitch systems. In general, the reference may be based on a functional expression or statistical analysis of the individual response signals.

In an advantageous embodiment, the reference may be derived from at least one individual response signal, and the at least one individual response signal may be selected based on a statistical analysis of the individual response signals received from each of the independent blade pitch systems.

A subgroup comprising one or more individual response signals may be selected from the group of all the individual response signals. The subgroup may be selected so that the response signals comprised in the subgroup possess a similar behaviour. The reference may be derived from signal values of the response signals of the subgroup. By basing the reference on signal values obtained from similarly behaving response signals, it is ensured that any differences are detected from the actual operation conditions as obtained during operation and not from ideal pre-operation parameters. A preset criterion may set so as to detect such a difference or deviation, e.g. a given percentage, of a response signal from the behaviour of the subgroup.

Members of the subgroup of the pitch responses may thus be selected based on statistical analysis of the response signals. Basing the reference and/or the selection of the members of the subgroup on derived functional expressions or statistical analysis may improve the certainty of the derived conclusions, since the response signals may possess a certain degree of noise. A number of functional expressions and derived statistical values may be used. Examples include, but are not limited to, mean values and standard deviations.

In an advantageous embodiment, an error signal based on the command signal and the response signal is monitored and an alarm signal is generated if the error signal fulfils an alarm criterion. The detection of the alarm signal may generate a request for comparing the response signals, i.e. a request for a test of the pitch response. An alarm criterion may be set up to detect unusual or unwanted operation. Such alarms may be common during wind turbine operation. An alarm, however, does not necessarily reflect a pitch system fault. But a pitch system fault will likely lead to an alarm at some stage, it is therefore advantageous to test the pitch system subsequent to receiving an alarm. Since alarm systems may be common to wind turbine control systems, embodiments of the present invention may advantageously be implemented as an improved functionality to existing alarm systems without major restructuring of the existing systems.

In embodiments, the test of the pitch response may be requested to occur subsequent to receiving an alarm, however a test may also be set to occur at a scheduled time instance or reoccur at preset intervals.

The testing of the response signals may, in embodiments, be conducted while the wind turbine generator is connected to a power grid. This may e.g. be advantageous if the test request is based on an alarm. In other embodiments may the test of the response signals be conducting while the wind turbine generator is disconnected from a power grid. This may be advantageous if the test affects the produced power in an unwanted or non-allowed way. An alarm may also be set so that the test is conducted while the wind turbine generator is disconnected from a power grid.

In advantageous embodiments, the command signal comprises a time-varying test signal, such as a test signal superimposed onto the command signal. The test signal may be in the form of a sine signal (cosine or sinus), in the form of a stepped ramp or in the form of a linear ramp. Simulations have shown that a sine signal or a stepped ramp may improve the detection of pitch system faults. In general, any form of time-variation may be used. A time varying test signal may stress the pitch system and thereby enhance the presence of any deviating or sub-optimal behaviour in-the pitch response.

In an advantageous embodiment, the test signal may be in the form of a plurality of signal segments. Imposing a plurality of signal segments, such as a sequence of signal segments, may further improve the detection of a pitch system fault, since a variation in the behaviour of the pitch response between the segments may further indicate a pitch system fault. Typically between 2 and 10 segments, such as 2, 3, 5, 7, 10 may be used. However even more segments may also be used.

In accordance with a second aspect of the present invention, there is provided a pitch control system for a wind turbine generator comprising two or more rotor blades, the two or more rotor blades comprise a blade pitch system for operating the blade pitch, the pitch control system comprises:
- a signal handling unit for applying a command signal to the blade pitch system, the command signal representing a desired pitch system action, and receiving a response signal from the blade pitch system, the response signal representing an actual pitch system action obtained in response to the command signal and desired pitch system action; and
- a test unit for comparing the response signal, or derivative thereof, from the blade pitch system to a reference, wherein each of the two or more rotor blades are pitched by independent blade pitch systems, and wherein individual command signals are applied to each of the independent blade pitch systems and individual response signals are received from each of the independent blade pitch systems, and wherein the reference is derived from at least one of the individual response signals.

The pitch control system may be a control system implementing the method of the first aspect.

In accordance with a third aspect of the present invention, there is provided a wind turbine generator, wherein the blade pitch systems are controlled by, or implements the functionality of, a pitch control system in accordance with the first or second aspect of the invention.

In a fourth aspect of the present invention, there is provided a computer program product having a set of instructions, when in use on a computer, to cause the computer to perform the method of the first aspect. The computer may be a processing unit implemented into the control system of the second or third aspect of the invention.

In general, the individual aspects of the present invention may each be combined with any of the other aspects. These and other aspects of the invention will be apparent from the following description with reference to the described embodiments.

### BRIEF DESCRIPTION OF THE FIGURES

Embodiments of the invention will be described, by way of example only, with reference to the drawings, in which
FIG. 1 schematically illustrates a wind turbine generator with three rotor blades;
FIG. 2 illustrates a schematic graph showing pitch errors as a function of time for a system comprising a common blade pitch system (not present invention);
FIG. 3A illustrates a graph showing pitch errors as a function of time for three individual rotor blades of a wind turbine and FIG. 3B schematically illustrates the general behaviour observed in FIG. 3A;
FIG. 4 illustrates simulation data of wind turbine data for a single blade pitch system;
FIG. 5A illustrates a simulated response signal and command signal together with the related error signal illustrated in FIG. 5B;
FIG. 6 plots the normalised standard deviation of the pitch error signal;
FIG. 7 schematically illustrates a test algorithm for testing the pitch bearing condition of the rotor blades of a WTG; and
FIG. 8 schematically illustrates the operation of a pitch control system.

### DESCRIPTION OF EMBODIMENTS

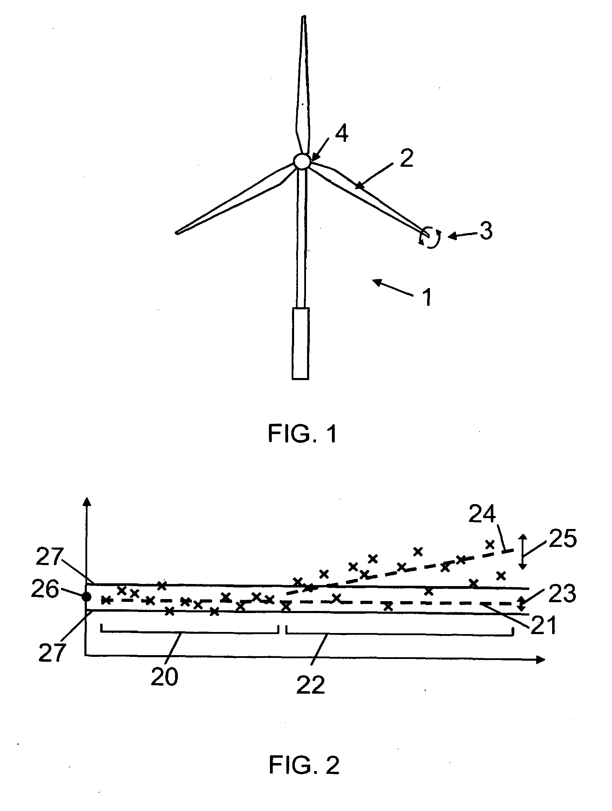

FIG. 1 schematically illustrates a wind turbine generator (WTG) 1 with three rotor blades 2. Moreover, the WTG 1 comprises a tower and a nacelle. The rotor blades comprise a blade pitch system for operating the blade pitch, here schematically illustrated by the curved arrows 3. Each rotor blade is attached to the nacelle, and in the joint between the rotor blades and the nacelle the blade pitch system 4 is placed for enabling pitching of the blades. The pitching of the blades is controlled by a pitch control system (not shown) by applying command signals, also referred to as pitch demands, and receiving response signals. In a first type of embodiment, the rotor blades are pitched by a common blade pitch system, so that all rotor blades are pitched together, whereas in a second type of embodiment, each of the rotor blades are pitched by independent blade pitch systems, so that each rotor blade may be pitched individually. In both types of systems, the pitch control system may monitor whether or not the actual pitching of the (individual) blades is performed in according with the commanded pitch or pitch demand during the operation. It may be observed that the actual pitching of the rotor blades does not follow the pitch demand. This may be due to pitch bearing faults or various non-fault factors. As an example, gusting may temporally hinder or disturb the pitching. Typically, the pitch is controlled by means of a hydraulic pitch system. In embodiments, however, an electrically pitch system may be envisioned. It is to be understood, that the invention is not limited to the type of WTG or rotor blades illustrated. The WTG is merely shown for illustrative reasons.

In an embodiment the pitching of the rotor blades are monitored, e.g. by means of an error signal. The error signal may be based on the command signal and the response signal from each of the rotor blades. For example, the error signal may be a difference signal between the demanded pitch and the actual pitch. In an embodiment, an alarm signal is generated if the error signal fulfils an alarm criterion. An example of an alarm criterion may be that the actual pitch of a rotor blade is lacking behind the demanded pitch for more than a given preset time. For example a signal indicating that the pitch of blades for a common pitch system, or blade A for an individual pitch system has been 2 degrees behind the demanded pitch for 3 seconds may trigger an alarm signal, other alarm criteria can be envisioned. A number of reasons may cause a lacking of the pitch. One important reason relates to a bearing fault of one of the blades. However, a number of reasons which do not indicate a bearing fault may also cause such effects, and a wind turbine owner may ignore an alarm since it is judged that the probability of a false alarm is higher than the probability of a true alarms. In situations, the alarm signal may completely be neglected by setting the action of the alarm to "automatic restart". Ignoring a true alarm or not timely taking action on a true alarm may cause serious damage to a pitch bearing which again may cause pitch bearing blocking which will result in unwanted down time of the entire turbine.

The response signal from the blade pitch system of the rotor blades may be tested by comparing the response signals of the rotor blades and indicating a pitch bearing fault if a difference between response signals and reference is detected as being larger than a criterion. The comparison of the response signals is based on derived values, typically derived statistical values, from the pitch response.

In an embodiment, the test is initiated or triggered by the generation of an alarm signal, in another embodiment the test is performed at preset intervals, in yet another embodiment the test is performed at a scheduled time instance. For example, a test may be performed every 3 months, every time the wind turbine generator is disconnected from a power grid, or at other instances.

FIG. 2 illustrates a schematic graph showing pitch errors as a function of time for a system comprising a common blade pitch system for the rotor blades of a wind turbine. The pitch errors are shown on the vertical axis in arbitrary units, the error signal is represented by crosses (×). In the period indicated with reference numeral 20, the detected pitch errors are similar in magnitude as illustrated by derived values in the form of a mean value 21 and standard deviation 23. The mean value compare nicely with a reference, here exemplified by a reference value 26. In the period indicated with reference numerals 22, the pitch errors deviate from the reference value as illustrated by a line representing the mean value 24 and the standard deviation 25.

The preset criterion may be in the form of a threshold or threshold range as indicated with the lines 27. As an example, if the mean value is detected to surpass the threshold (range) it may be taken as an indication of a pitch system fault or suspected fault.

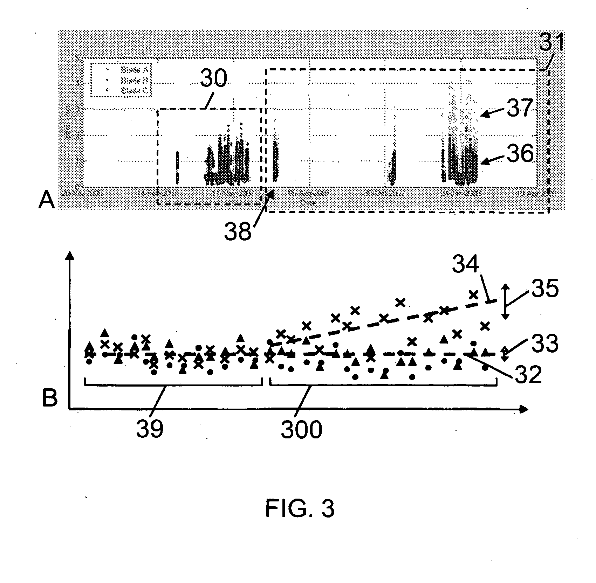

FIG. 3A illustrates a graph in the form of a screen dump showing pitch errors as a function of time for three individual rotor blades of a wind turbine. The pitch errors are shown on the vertical axis in arbitrary units. In the period indicated with reference numeral 30, the pitch errors of the three blades cannot be distinguished from each other, in that the errors relating to the three blades and the magnitudes of the errors are similar for all blades. In the period indicated with reference numerals 31, the pitch errors of the three blades are grouped into two groups. In one group 36, the pitch errors from two of the blades cannot be distinguished from each other, whereas the other group 37 predominantly comprises pitch errors from a single blade. Thus already around 1 July 2007 (ref. numeral 38), an indication to the wind turbine owner can be given as to a high probability of a fault of one of the pitch system.

FIG. 3B comprises a schematic representation of the behaviour observed in FIG. 3A as well as derived values of the error signals of each of the blades, e.g. in the form of a mean value (32, 34) and standard deviation (33, 35). The error signal is represented for the three rotor blades by a triangle (▲), a dot (●) and a cross (×). In a first period 39, the mean errors of all three blades are similar, as exemplified with the line 32. In this period, no significant difference between response signals from different rotor blades is observed. In the second period 300 the mean value 32 of two of the blades remain similar as to the first period, however, the mean value 34 and the standard deviation 35 of the third blade (×) slowly increases with time. A reference may be set as the mean value of the two blades with constant mean value 32, and the preset criterion may be set to detect the difference between the mean value of the two blades with constant mean value 32 and the mean value of the third blade 34. As an example, a fault or suspected fault in one of the pitch systems may be indicated if the difference exceeds a given percentage of the mean value of the two blades with constant mean value 32. As another example, a reference may be set as the standard deviation 33 of the two blades with constant mean value, and the preset criterion may be set to detect the difference between the standard deviation 33 of the two blades with constant mean value 32 and the standard deviation 35 of the third blade 34. The preset criterion may e.g. be set as a given increase in the standard deviation 35 with respect to the standard deviation 33.

In general, the reference and the preset criterion may be based on a functional expression or statistical analysis of the response signal of the group of response signals that behave normally. To this end, this group, i.e. a subgroup of the signals, has to be detected. Detection of a subgroup of response signals may e.g. be achieved by a statistical analysis of all the response signals and then group together all the response signals which behave in a similar manner, a number of mathematical routines exist for this.

When testing the response signals from the blade pitch system of the rotor blades by comparing the response signals and indicating a pitch bearing fault if a difference in the response signals is detected, it may be an advantage to impose a test signal to the command signal. The test signal may be a time-varying signal. A time-varying signal may force the pitch system to quickly adapt to changing conditions which may bring out or accentuate a pitch fault into the response signal. The specific form of the time-varying signal need not be important, however for easier implementation well-known or well behaved time-varying signals may advantageously be used. In embodiments, the pitch demand may comprise a sine signal, a stepped ramp, a linear ramp or even other types of test signals. In the following a pitch demand with a superimposed sine signal is described.

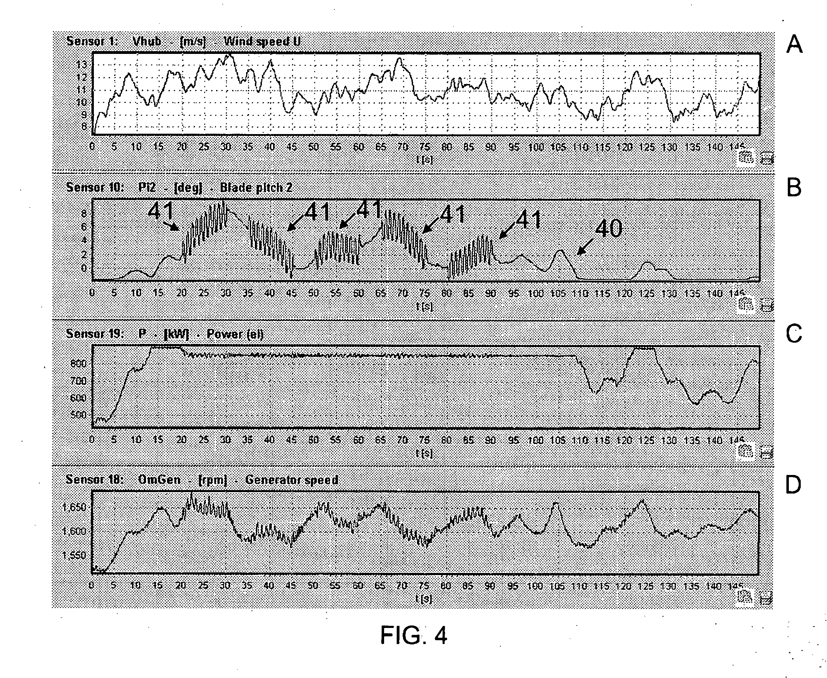

FIG. 4 illustrates simulation data of wind turbine data. The plots are shown for a common pitch system for all rotor blades.

In FIG. 4A the simulated wind speed is plotted. The simulated data is based on this wind data.

FIG. 4B shows the resulting pitching of a rotor blade. The pitch signal comprises two contributions. At various time periods e.g. the period above 90 sec., the pitch response is the response arising from the wind speed. At other periods 41 (20-30 sec.; 35-45 sec.; 50-60 sec.; 65-75 sec.; and 80-90 sec.), a plurality (here five) of sine signal segments has been superimposed onto the pitch demand. This imposed sine signal is reflected as a sine signal in the pitch response in the same periods.

The imposed sine signal is reflected in the output power, as an increased output fluctuation (FIG. 4C) and in the generator speed (FIG. 4D) as fluctuations in the speed.

The test of the pitch response may in an embodiment be conducted while the wind turbine generator is connected to a power grid. However, as seen from FIG. 4C, the test may cause fluctuations in the output power, and it may, at least in some situations, be preferred to conduct the test while the wind turbine generator is disconnected from the power grid to avoid such fluctuations in the output power.

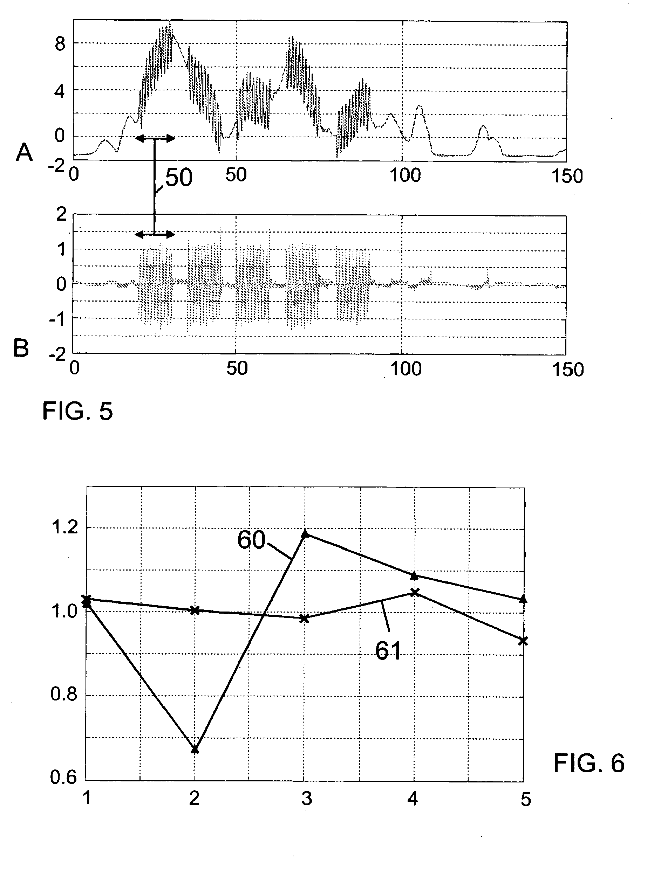

FIG. 5A illustrates the simulated pitch response of FIG. 4B, for the two signals of the actual pitch angle (the pitch response) and the demanded pitch angle or pitch angle reference (the pitch demand). The signals can however not be distinguished since the two signals are almost identical. In FIG. 5B, the error signal (that is the difference signal) is plotted. As can be seen, in the periods of imposed sine signal, the pitch error is greatly enhanced. Thus, while the response signal (or differences signal) does not clearly indicate a pitch fault, imposing a time-varying signal to the command signal may bring-out or accentuate such faults in the response signals.

FIG. 6 plots the normalised standard deviation of the pitch error for the normal situation where the standard deviation has been calculated for five periods of 10 seconds in periods without imposed sine signal (triangle, 60), and for the five periods of 10 seconds with imposed sine signal (cross, 61). FIG. 5 illustrates five tests, the test number is given at the horizontal axis and the normalized standard deviation is shown at the vertical axis. At test 1, the standard deviation has been determined for 10 seconds of normal pitch response signal, which in test 1 amounts to a standard deviation of just above 1. Also the standard deviation for the first of the 10 seconds period of the error signal with the imposed sine signal (ref. numeral 50 in FIG. 5) has been plotted, which also amounts to just above 1. The same test has been repeated for each of the five sine signal segments. At the tests 2-5 the difference between the derived standard deviations are however larger than for test 1.

As can be seen the standard deviation 60 from the periods without imposed signal varies somewhat between the tests 1 to 5, whereas the standard deviation 61 from the periods with imposed signal is fairly constant. The determination of standard deviations, or other derived functional expressions or statistical measures, can be used as the reference to evaluate the pitch responses up against preset criteria when determining the presence of a possible or suspected bearing fault. In the Figure the derived signal is shown for a single pitch response, in accordance with embodiments of the present invention, a similar analysis may be made for each individual pitch system and compared in order to detect any deviating behaviour.

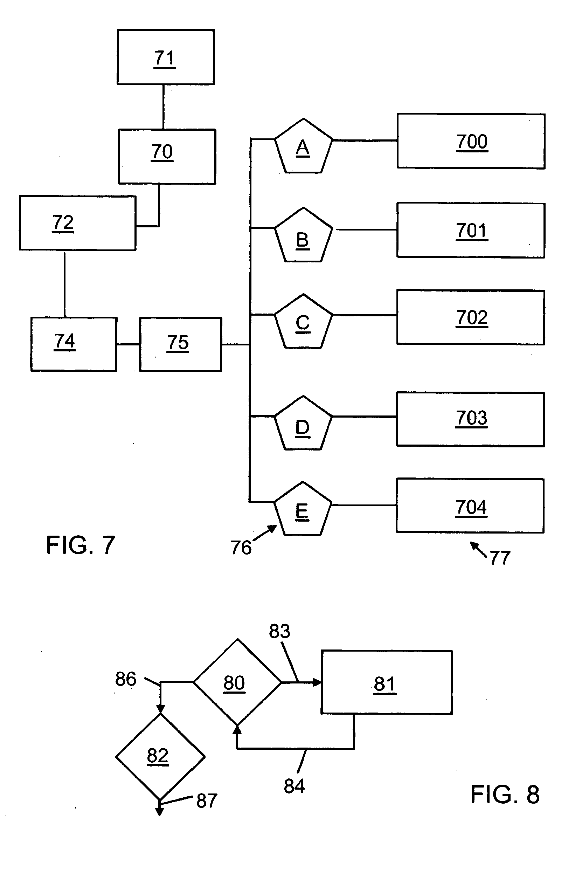

FIG. 7 schematically illustrates a test algorithm for testing the pitch bearing condition of the rotor blades of a WTG.

A signal handling unit 70 applies a command signal to the blade pitch system 71 and receives the response signal from the blade pitch system of each of the rotor blades. The response signals from the blade pitch system are tested in a test unit or comparison unit 72 by comparing the response signals in accordance with embodiments of the present invention.

In an embodiment, three error signals, e.g. the difference signal between demanded pitch and actual pitch, are monitored and an alarm signal 74 is generated if the error signal fulfils an alarm criterion. In another embodiment, only a single error signals is monitored.

The detection of the alarm signal generates a request for testing the response signals 75. The test request may include an instruction as to when and how the test is to be performed. For example, if the test is performed during operation, certain conditions may have to be fulfilled, e.g. meteorological conditions or specific grid conditions. The test request may also specify that the turbine is disconnected from the grid until a test have been performed, or the test request may specify that the next time the turbine is disconnected from the grid a test is performed. Other possibilities for specific test requests exist.

Different types of tests may be performed. In a first type of test, the error signal obtained from normal operation is monitored. With regard to FIG. 2 or 3, the mean value, a standard deviation or other statistical measure may be derived as a function of time for the rotor blades or for each of the three blades. In the embodiment of FIG. 3, the statistical measure of the two signals with the lowest error may be combined to a reference value. A suspected pitch bearing fault may be detected if a difference between the signals with the highest error and the combined reference value is larger than a preset criterion. For example, if the difference is more than 15% higher than the reference value for more than 5 consecutive tests.

In other types of tests, the command signal enforces a sine signal, a stepped ramp or a linear ramp on to the demanded pitching. An error signal, as exemplified in FIG. 5B, may be derived for the rotor blades or for each of the rotor blades and the standard deviation or other statistical measure may be derived. As with the first type of test, the derived statistical value may be monitored in order to determine whether or not the pitch response, or a single pitch response, behaves differently.

The outcome of the test may be graded, e.g. in terms of five grades running from A to E (ref. numeral 76) and to each of the grades a specific action may be attached 77.

In the test, the response signals are evaluated against a preset criterion. The grading may reflect the difference between the actual pitch responses (or their derived statistical values) and the preset criterion.

As a grading example the following grading and resulting actions may be used:

If the test result is clearly within the preset criterion, the operation may be graded A and the WTG action may be set to continue normal operation 700.

If the test result is just within the limits of the preset criterion, the operation may be graded B and the test may be repeated 701.

If the test result is outside the preset criterion within an acceptable limit, the operation may be graded C and the test may be repeated 702.

If the test result is somewhat outside the preset criterion but still above a critical limit, the operation may be graded D and the WTG may be set to pause 703.

If the test result is outside the preset criterion with a critical amount, the operation may be graded E and the WTG may be stopped 704.

In FIG. 7 the following labels may be assigned to the reference numerals:
70: Signal handling unit
71: Blade pitch system
72: Test unit / comparison unit
74: Alarm unit
75: Signal test unit
76: Grades of test outcome
77: Assigned actions
700: Continue normal WTG operation
701: Repeat test
702: Repeat test
703: Pause WTG operation
704: Stop WTG operation

FIG. 8 schematically illustrates the operation of a pitch control system in accordance with embodiments of the present invention.

A signal handling unit 80 applies a command signal or pitch demand 83 to the blade pitch system 81 of (each) of the rotor blades and receives the response signal(s) or pitch response(s) 84 from the blade pitch system of the rotor blades. The pitch response(s) are inputted 86 into a test unit or comparing unit 82 for testing/comparing the response signal(s) to a reference. In an embodiment, a signal indicative of a pitch bearing fault is generated 87 if a difference between the response signal(s) and the reference is detected as being larger than a preset criterion.

The invention can be implemented by means of hardware, software, firmware or any combination of these. The invention or some of the features thereof can also be implemented as software running on one or more data processors and/or digital signal processors. The individual elements of an embodiment of the invention may be physically, functionally and logically implemented in any suitable way such as in a single unit, in a plurality of units or as part of separate functional units. The invention may be implemented in a single unit, or be both physically and functionally distributed between different units and processors.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method of operating a pitch control system for a wind turbine generator comprising two or more rotor blades, the two or more rotor blades comprise a blade pitch system for operating the blade pitch, the method comprises:
- applying a command signal to the blade pitch system, the command signal representing a desired pitch system action, and receiving a response signal from the blade pitch system, the response signal representing an actual pitch angle obtained in response to the command signal and desired pitch system action; and
- comparing the response signal, or derivative thereof, from the blade pitch system to a reference, wherein
each of the two or more rotor blades are pitched by independent blade pitch systems, and wherein individual command signals are applied to each of the independent blade pitch systems and individual response signals are received from each of the independent blade pitch systems, and wherein
the reference is derived from at least one of the individual response signals.

2. The method according to claim 1, wherein a signal indicative of a pitch system fault is generated if a difference between the response signal and the reference is detected as being larger than a preset criterion.

3. The method according to claim 1, wherein the reference is derived from at least one individual response signal, the at least one individual response signal being selected based on a statistical analysis of the individual response signals received from each of the independent blade pitch systems.

4. The method according to any of the preceding claims, wherein the comparison of the response signal from the blade pitch system to the reference is done in terms of a derived functional expression or derived statistical value of the response signal.

5. The method according to claim 4, wherein the derived functional expression of the response signal is based on a difference signal between the response signal and the command signal.

6. The method according to any of the preceding claims, wherein the method further comprises monitoring an error signal based on the response signal and generating an alarm signal if the error signal fulfils an alarm criterion.

7. The method according to claim 6, wherein the detection of the alarm signal generates a request for a test of the pitch response, the test of the pitch response being based on the comparing of the response signals from the blade pitch system to the reference.

8. The method according to claim 7, wherein the test of the pitch response is conducting while the wind turbine generator is connected to a power grid.

9. The method according to claim 7, wherein the test of the pitch response is conducting while the wind turbine generator is disconnected from a power grid.

10. The method of according to any of the preceding claims, wherein the command signal comprises a time-varying test signal.

11. The method of according to claim 10, wherein the time-varying test signal is a signal in the group consisting of: a test signal in the form of a sine signal, a test signal in the form of a stepped ramp and a test signal in the form of a linear ramp.

12. The method according to any of the claims 10 or 11, wherein the test signal is in the form of a plurality of signal segments.

13. A pitch control system for a wind turbine generator comprising two or more rotor blades, the two or more rotor blades comprise a blade pitch system for operating the blade pitch, the pitch control system comprises:
- a signal handling unit for applying a command signal to the blade pitch system, the command signal representing a desired pitch system action, and receiving a response signal from the blade pitch system, the response signal representing an actual pitch angle obtained in response to the command signal and desired pitch system action; and
- a test unit for comparing the response signal, or derivative thereof, from the blade pitch system to a reference,wherein
each of the two or more rotor blades are pitched by independent blade pitch systems, and wherein individual command signals are applied to each of the independent blade pitch systems and individual response signals are received from each of the independent blade pitch systems, and wherein
the reference is derived from at least one individual response signal.

14. A wind turbine generator comprising two or more rotor blades, wherein the two or more rotor blades comprises a blade pitch system, and wherein the blade pitch systems are controlled by a pitch control system in accordance with claim 13.

15. A computer program product having a set of instructions, when in use on a computer, to cause the computer to perform the method of any of the claims 1 to 12.

## Patentansprüche

1. Verfahren zum Betrieb eines Pitchsteuerungssystems für einer Windkraftanlage, umfassend zwei oder mehr Rotorblätter, wobei die zwei oder mehr Rotorblätter ein Blattwinkelsystem für den Betrieb des Blattwinkels umfassen, wobei das Verfahren umfasst:
- Anlegen eines Befehlssignals am Blattwinkelsystem, wobei das Befehlssignal einen gewünschten Vorgang des Pitchsystems darstellt, und Empfangen eines Antwortsignals vom Blattwinkelsystem, wobei das Antwortsignal einen tatsächlichen Pitchwinkel, erhalten als Reaktion auf das Befehlssignal und den gewünschten Vorgang des Pitchsystems, darstellt; und
- Vergleichen des Antwortsignals des Blattwinkelsystems oder eine Ableitung davon mit einem Referenzsignal, wobei
jedes der zwei oder mehr Rotorblätter von einem unabhängigen Blattwinkelsystem gepitcht wird und wobei die einzelnen Befehlssignale an jedem der unabhängigen Blattwinkelsysteme angelegt und einzelne Antwortsignale von jedem der unabhängigen Blattwinkelsysteme erhalten werden und wobei
das Referenzsignal von mindestens einem der einzelnen Antwortsignale abgeleitet ist.

2. Verfahren nach Anspruch 1, wobei ein Signal, das auf einen Fehler des Pitchsystems hinweist, erzeugt wird, wenn ein Unterschied zwischen dem Antwortsignal und dem Referenzsignal erfasst wird, der größer ist als ein vorbestimmtes Kriterium.

3. Verfahren nach Anspruch 1, wobei das Referenzsignal von mindestens einem einzelnen Antwortsignal abgeleitet ist, wobei das mindestens eine einzelne Antwortsignal auf der Grundlage einer statistischen Analyse der einzelnen Antwortsignale ausgewählt wird, die von jedem der unabhängigen Blattwinkelsysteme empfangen werden.

4. Verfahren nach einem der vorhergehenden Ansprüche, wobei der Vergleich des Antwortsignals des Blattwinkelsystems mit dem Referenzsignal in Bezug auf einen abgeleiteten funktionalen Ausdruck oder einen abgeleiteten statistischen Wert des Antwortsignals erfolgt.

5. Verfahren nach Anspruch 4, wobei der abgeleitete funktionale Ausdruck des Antwortsignals auf einem Differenzsignal zwischen dem Antwortsignal und dem Befehlssignal basiert.

6. Verfahren nach einem der vorhergehenden Ansprüche, wobei das Verfahren weiterhin das Überwachen eines Fehlersignals auf der Grundlage des Antwortsignals und das Erzeugen eines Alarmsignals umfasst, falls das Fehlersignal ein Alarmkriterium erfüllt.

7. Verfahren nach Anspruch 6, wobei das Erfassen des Alarmsignals eine Anforderung eines Tests der Pitchreaktion erzeugt, wobei der Test der Pitchreaktion auf dem Vergleich der Antwortsignale des Blattwinkelsystems mit dem Referenzsignal basiert.

8. Verfahren nach Anspruch 7, wobei der Test der Pitchreaktion durchgeführt wird, während der Windkraftanlage an ein Netz angeschlossen ist.

9. Verfahren nach Anspruch 7, wobei der Test der Pitchreaktion durchgeführt wird, während der Windkraftanlage von einem Netz getrennt ist.

10. Verfahren nach einem der vorhergehenden Ansprüche, wobei das Befehlssignal ein zeitlich veränderliches Prüfsignal umfasst.

11. Verfahren nach Anspruch 10, wobei das zeitlich veränderliche Prüfsignal ein Signal aus der Gruppe ist, bestehend aus: einem Prüfsignal in Form eines Sinussignals, einem Prüfsignal in Form einer stufenförmigen Rampe und einem Prüfsignal in Form einer linearen Rampe.

12. Verfahren nach einem der Ansprüche 10 oder 11, wobei das Prüfsignal die Form einer Mehrzahl von Signalsegmenten hat.

13. Pitchsteuerungssystem für einer Windkraftanlage, umfassend zwei oder mehr Rotorblätter, wobei die zwei oder mehr Rotorblätter ein Blattwinkelsystem für den Betrieb des Blattwinkels umfassen, wobei das Pitchsteuerungssystem umfasst:
- eine Signalhandhabungseinheit zum Anlegen eines Befehlssignals am Blattwinkelsystem, wobei das Befehlssignal einen gewünschten Vorgang des Pitchsystems darstellt, und Empfangen eines Antwortsignals vom Blattwinkelsystem, wobei das Antwortsignal einen tatsächlichen Pitchwinkel, erhalten als Reaktion auf das Befehlssignal und den gewünschten Vorgang des Pitchsystems, darstellt; und
- eine Prüfeinheit zum Vergleichen des Antwortsignals des Blattwinkelsystems oder eine Ableitung davon mit einem Referenzsignal, wobei
jedes der zwei oder mehr Rotorblätter von einem unabhängigen Blattwinkelsystem gepitcht wird und wobei die einzelnen Befehlssignale an jedem der unabhängigen Blattwinkelsysteme angelegt und einzelne Antwortsignale von jedem der unabhängigen Blattwinkelsysteme erhalten werden und wobei
das Referenzsignal von mindestens einem einzelnen Antwortsignal abgeleitet ist.

14. Eine Windkraftanlage, umfassend zwei oder mehr Rotorblätter, wobei die zwei oder mehr Rotorblätter ein Blattwinkelsystem umfassen und wobei die Blattwinkelsysteme über ein Pitchsteuerungssystem nach Anspruch 13 gesteuert werden.

15. Computerprogrammprodukt mit einem Satz Anweisungen, die auf einem Computer verwendet bewirken, dass der Computer das Verfahren nach einem der Ansprüche 1 bis 12 durchführt.

## Revendications

1. Méthode d'actionnement d'un système de contrôle de calage destiné à une éolienne comprenant deux ou plusieurs pales de rotor, les deux ou plusieurs pales de rotor comprenant un système de calage de pale pour effectuer le calage des pales, la méthode comprenant :
- l'application d'un signal de commande au système de calage de pale, le signal de commande représentant une action souhaitée du système de calage, et la réception d'un signal de réponse provenant du système de calage de pale, le signal de réponse représentant une action effective du système de calage obtenue en réponse au signal de commande et à l'action souhaitée du système de calage ; et
- la comparaison du signal de réponse, ou d'un dérivé de celui-ci, provenant du système de calage de pale avec une référence, dans laquelle
chacune des deux ou plusieurs pales de rotor est calée par un système de calage de pale indépendant, et dans laquelle des signaux de commande individuels sont appliqués à chacun des systèmes de calage de pale indépendants et des signaux de réponse individuels sont reçus de chacun des systèmes de calage de pale indépendants, et dans laquelle
la référence est dérivée d'au moins un des signaux de réponse individuels.

2. La méthode selon la revendication 1, dans laquelle un signal indiquant une défaillance d'un système de calage est généré s'il est détecté qu'une différence entre le signal de réponse et la référence est plus importante qu'un critère prédéfini.

3. La méthode selon la revendication 1, dans laquelle la référence est dérivée d'au moins un signal de réponse individuel, l'au moins un signal de réponse individuel étant choisi sur la base d'une analyse statistique des signaux de réponse individuels reçus de chacun des systèmes de calage de pale indépendants.

4. La méthode selon l'une quelconque des revendications précédentes, dans laquelle la comparaison du signal de réponse provenant du système de calage de pale avec la référence est effectuée en termes d'expression fonctionnelle dérivée ou de valeur statistique dérivée du signal de réponse.

5. La méthode selon la revendication 4, dans laquelle l'expression fonctionnelle dérivée du signal de réponse est basée sur un signal de différence entre le signal de réponse et le signal de commande.

6. La méthode selon l'une quelconque des revendications précédentes, dans laquelle la méthode comprend en outre la surveillance d'un signal d'erreur sur la base du signal de réponse et la génération d'un signal d'alarme si le signal d'erreur répond à un critère d'alarme.

7. La méthode selon la revendication 6, dans laquelle la détection du signal d'alarme génère une demande de test de la réponse de calage, le test de la réponse de calage étant basé sur la comparaison des signaux de réponse provenant du système de calage de pale avec la référence.

8. La méthode selon la revendication 7, dans laquelle le test de la réponse de calage est effectué lorsque l'éolienne est connectée à un réseau électrique.

9. La méthode selon la revendication 7, dans laquelle le test de la réponse de calage est effectué lorsque l'éolienne est déconnectée d'un réseau électrique.

10. La méthode selon l'une quelconque des revendications précédentes, dans laquelle le signal de commande comprend un signal de test variant dans le temps.

11. La méthode selon la revendication 10, dans laquelle le signal de test variant dans le temps est un signal appartenant au groupe constitué de : un signal de test sous la forme d'un signal sinusoïdal, un signal de test sous la forme d'une rampe en escalier et un signal de test sous la forme d'une rampe linéaire.

12. La méthode selon l'une quelconque des revendications 10 ou 11, dans laquelle le signal de test se présente sous la forme d'une pluralité de segments de signal.

13. Système de contrôle de calage destiné à une éolienne comprenant deux ou plusieurs pales de rotor, les deux ou plusieurs pales de rotor comprenant un système de calage de pale pour effectuer le calage des pales, le système de contrôle de calage comprenant :
- une unité de gestion de signaux destinée à appliquer un signal de commande au système de calage de pale, le signal de commande représentant une action souhaitée du système de calage, et à recevoir un signal de réponse provenant du système de calage de pale, le signal de réponse représentant une action effective du système de calage obtenue en réponse au signal de commande et à l'action souhaitée du système de calage ; et
- une unité de test destinée à comparer le signal de réponse, ou un dérivé de celui-ci, provenant du système de calage de pale avec une référence, dans lequel
chacune des deux ou plusieurs pales de rotor est calée par un système de calage de pale indépendant, et dans lequel des signaux de commande individuels sont appliqués à chacun des systèmes de calage de pale indépendants et des signaux de réponse individuels sont reçus de chacun des systèmes de calage de pale indépendants, et dans lequel
la référence est dérivée d'au moins un signal de réponse individuel.

14. Une éolienne comprenant deux ou plusieurs pales de rotor, dans laquelle les deux ou plusieurs pales de rotor comprennent un système de calage de pale, et dans laquelle les systèmes de calage de pale sont contrôlés par un système de contrôle de calage selon la revendication 13.

15. Produit logiciel possédant un ensemble d'instructions, lorsqu'il est utilisé sur un ordinateur, destiné à faire exécuter par l'ordinateur la méthode de l'une quelconque des revendications 1 à 12.
